(19) Europäisches Patentamt / European Patent Office / Office européen des brevets

(11) **EP 2 402 937 B1**

(12) **EUROPEAN PATENT SPECIFICATION**

(45) Date of publication and mention
of the grant of the patent:
**12.04.2017 Bulletin 2017/15**

(51) Int Cl.:
*G10L 25/90* (2013.01)        *G06F 17/30* (2006.01)
*G10H 1/00* (2006.01)

(21) Application number: **09840724.0**

(22) Date of filing: **16.11.2009**

(86) International application number:
**PCT/JP2009/006112**

(87) International publication number:
**WO 2010/097870 (02.09.2010 Gazette 2010/35)**

(54) **MUSIC RETRIEVAL APPARATUS**

MUSIKABRUFEINRICHTUNG

DISPOSITIF D'EXTRACTION DE MUSIQUE

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **27.02.2009 JP 2009046525**

(43) Date of publication of application:
**04.01.2012 Bulletin 2012/01**

(73) Proprietor: **Mitsubishi Electric Corporation
Tokyo 100-8310 (JP)**

(72) Inventor: **ABE, Yoshiharu
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A2- 1 291 846        JP-A- 2007 183 921
JP-A- 2009 015 535        JP-B2- 3 764 033
JP-T- 2004 534 274        US-A- 5 874 686
US-A1- 2005 086 052**

• **ICHIKAWA ET AL.: 'Ontei Tokuchoryo no
Kakuritsu Bunpu o Koryo shita Humming
Nyuryoku Gakkyoku Kensaku System' IPSJ SIG
NOTES (MUS) vol. 2007, no. 81, 01 August 2007,
pages 33 - 38**
• **TAKUICHI NISHIMURA: 'Ruiji Melody Kukan
Kenshutsu ni yoru Ongaku Jikeiretsu Kensaku
no Kosokuka' IEICE TECHNICAL REPORT
(SP2000-130- 141) vol. 100, no. 635, 15 February
2001, pages 63 - 70**

## Description

TECHNICAL FIELD

The present invention relates to a music retrieval apparatus for retrieving a piece of music.

BACKGROUND ART

As a conventional technique for retrieving a piece of music, a method has been proposed which retrieves a piece of music on the basis of a melody using a hummed melody as a clue (see Patent Documents 1 and 2 and Non-Patent Documents 1 - 3, for example). The method retrieves a desired piece of music by matching a retrieval key based on the input hummed melody with a retrieval key based on the melody data of the tune.

The retrieval key based on the hummed melody is created by obtaining relative pitch from a pitch sequence consisting of pitch (interval) calculated for each note section of the humming.

In addition, the retrieval key based on the melody data of a tune is created in the same manner as the humming side using a pitch sequence extracted from the melody data of the tune. Incidentally, as the melody data of the tune, MIDI data is used which scarcely includes an error in transcription because it is supplied from a provider of the piece of music.

In addition, to retrieve a piece of music, DP (Dynamic Programming) matching performed in units of notes is employed. For example, continuous DP is used which is able to perform spotting retrieval that detects both the similarity of singing in a tune and matching sections as disclosed in Non-Patent Document 3.

As a conventional technique for extracting melody data from a piece of music, Non-Patent Document 4 discloses a fundamental frequency estimation method limited to a vocal part, which extracts the melody data of the vocal part constituting the theme of the piece of music.

Furthermore, as a conventional technique for separating individual sound sources from a musical sound signal recorded in stereo, Non-Patent Document 5 proposes a method of clustering a whole tune using volume ratios of the individual frequency components between signals of right and left channels.

Prior Art Document

Patent Document

Patent Document 1: Japanese Patent No. 3467415.
Patent Document 2: Japanese Patent No. 3844627.
Patent document 3: United States Patent No. 5 874 686.

Non-Patent Document

Non-Patent Document 1: Tomonari SONODA and two others, "A WWW-Based Melody Retrieval System", The Transactions of the Institute of Electronics, Information and Communication Engineers, Vol.J82-D-II, No. 4, pp. 721-731, April, 1999.
Non-Patent Document 2 : Tetsuya KAGEYAMA and Yosuke TAKASHIMA, "A Melody Retrieval Method with Hummed Melody", The Transactions of the Institute of Electronics, Information and Communication Engineers, Vol. J77-D-II, No. 8, pp. 1543-1551, August, 1994.
Non-Patent Document 3: Hiroki HASHIGUCHI and four others, "Music Signal Spotting Retrieval by a Hamming Query Using Model Driven Path Continuous Dynamic Programming", The Transactions of the Institute of Electronics, Information and Communication Engineers, Vol. J84-D-II, No. 12, pp. 2479-2488, December, 2001.
Non-Patent Document 4: Hiromasa FUJIHARA and two others, "An F0 estimation method for detecting vocal part in polyphonic music by using vocal GMM and Viterbi search", Information Processing Society of Japan, Special Interest Group on Music and Computer, Report 2007-MUS-71(20), Vol. 2007, No. 81, pp. 119-126, August 2, 2007.
Non-Patent Document 5: Akihiro MIWA and Satoru MORITA, "Automatic Music Transcription Using Stereo Musical Sound Signal for a Trio", The Transactions of the Institute of Electronics, Information and Communication Engineers, Vol. J84-D-II, No. 7, pp. 1251-1260, July, 2001.

DISCLOSURE OF THE INVENTION

The conventional techniques estimate the note sections from an input singing voice or humming, obtain pitch and duration by conducting pitch estimation of the note sections, and retrieves the melody data of a piece of music according to a time series of the resultant pitch and duration. Accordingly, if there are fluctuations in singing of a singer, an error will occur in the note section or pitch, offering a problem of bringing about a retrieval error of the piece of music.

In addition, since the retrieval key is created from the melody data of the piece of music to be retrieved, a problem arises of being unable to retrieve a tune.

The present invention is implemented to solve the foregoing problems. Therefore it is an object of the present invention to provide a music retrieval apparatus capable of retrieving a piece of music and of preventing a retrieval error due to extraction of pitch frequencies. This object is solved by the music retrival apparatus of claim 1. Further improvements are given by the dependent claims.

A music retrieval apparatus in accordance with the present invention includes: a first feature extracting unit for generating a feature vector time series representing a feature of the melody of a retrieval input by extracting a sequence of pitch frequencies from the retrieval input and by calculating an inner product of a sequence cut out from the sequence of pitch frequencies for each prescribed time window and values given by a prescribed function representing a shape of a pitch curve the sequence cut out can take; a second feature extracting unit for generating a feature vector time series representing a feature of the melody of a retrieval target by extracting a sequence of pitch frequencies from the retrieval target and by calculating an inner product of a sequence cut out from the sequence of pitch frequencies for each prescribed time window and values given by the prescribed function; and a retrieval unit for matching the feature vector time series of the retrieval input with the feature vector time series of the retrieval target to calculate a matching position and similarity of the feature vector time series of the retrieval input in the feature vector time series of the retrieval target, and for retrieving a piece of music from the retrieval target according to the similarity.

According to the present invention, it estimates the sequences of pitch frequencies describing melodies of the singing used as the retrieval input and the tune data used as the retrieval target, obtains the feature values of the melodies by calculating the inner products of the sequences cut out from the sequence of pitch frequencies by the prescribed time window and the values given by the function representing the shape of the pitch curve the sequences can take, matches the melody of the input singing with the melody of the retrieval target tune in terms of the feature vector time series consisting of the feature value vectors obtained, and retrieves a desiredpiece of music from the retrieval target tunes according to the matching result. With such a configuration, it offers an advantage of being able to retrieve a tune, and to prevent a retrieval error due to extraction of the pitch frequencies.

BRIEF DESCRIPTION OF THE DRAWINGS

FIG. 1 is a block diagram showing a configuration of a music retrieval apparatus of an embodiment 1 in accordance with the present invention;
FIG. 2 is a diagram illustrating a feature extraction process on a retrieval input side;
Fig. 3 is a block diagram showing a configuration of the vocal emphasis unit in FIG. 1;
FIG. 4 is a graph showing characteristics of a gain function;
FIG. 5 is a diagram showing an example of a spectrogram of an original musical sound signal and its pitch extraction result, and a spectrogram of the musical sound signal after vocal emphasis and its pitch extraction result;
FIG. 6 is a diagram illustrating a feature extraction process on a retrieval target side;
FIG. 7 is a diagram illustrating a continuous DP by the retrieval unit in FIG. 1;
FIG. 8 is a diagram illustrating a feature extraction process on a retrieval target side by an embodiment 2 in accordance with the present invention; and
FIG. 9 is a diagram illustrating a feature extraction process from a plurality of pitch candidates by an embodiment 3 in accordance with the present invention.

EMBODIMENTS FOR CARRYING OUT THE INVENTION

The embodiments for carrying out the invention will now be described with reference to the accompanying drawings to explain the present invention in more detail.

EMBODIMENT 1

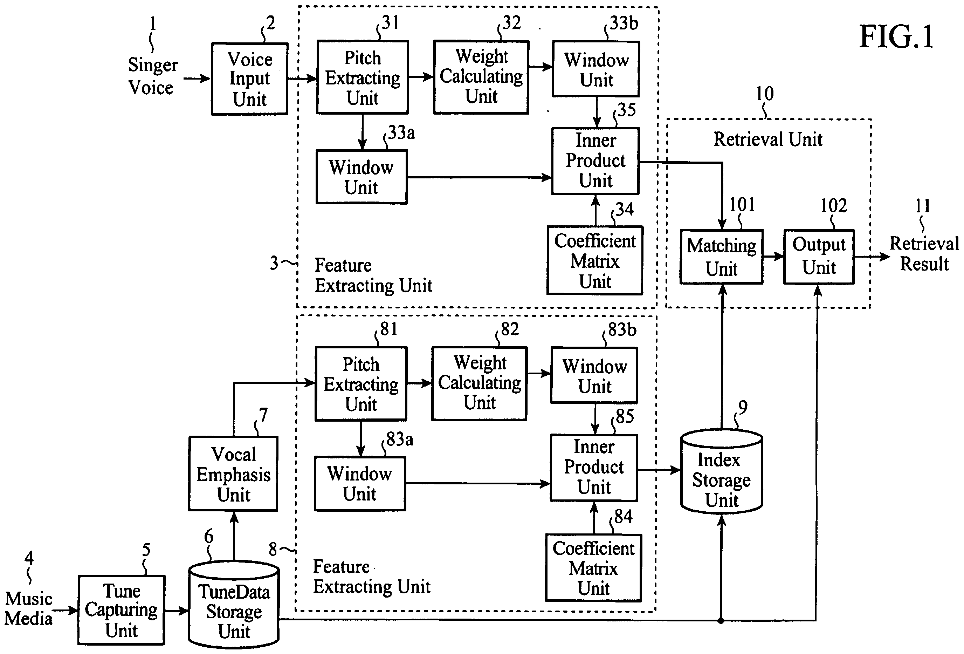

FIG. 1 is a block diagram showing a configuration of a music retrieval apparatus of an embodiment 1 in accordance with the present invention. In FIG. 1, the music retrieval apparatus of the embodiment 1 comprises a voice input unit 2, feature extracting units 3 and 8, a tune capturing unit 5, a tune data storage unit 6, a vocal emphasis unit 7, an index storage unit 9 and a retrieval unit 10. The voice input unit 2 is a component for receiving a singer voice 1 produced by a singer and for outputting it as a voice signal. It comprises a microphone for picking up voice and an A/D converter for converting the analog voice signal picked up to a digital signal.

The feature extracting unit (first feature extracting unit) 3 is a component for extracting a feature vector time series representing a melody of a singer voice (retrieval input) 1 from a voice signal supplied from the voice input unit 2. It comprises a pitch extracting unit 31, a weight calculating unit 32, window units 33a and 33b, a coefficient matrix unit 34 and an inner product unit 35. The pitch extracting unit 31 is a component for acquiring voice signal samples supplied from the voice input unit 2 through a prescribed time window as a frame, and for estimating the pitch frequency for each frame acquired. The weight calculating unit 32 is a component for calculating weight coefficients which are numerical values (probabilities) indicating probabilities of the pitch frequencies estimated by the pitch extracting unit 31.

The window unit 33a is a component for cutting out a sequence of samples of the pitch frequencies included in a prescribed time window from the sequence of pitch frequencies output from the pitch extracting unit 31. The window unit 33b is a component for cutting out a sequence of samples of the weight coefficients included in the prescribed time window corresponding to the sequence of samples of the pitch frequencies cut out by the window unit 33a from the weight sequence of the weight coefficients output from the weight calculating unit 32.

The coefficient matrix unit 34 is a storage unit for storing a coefficient matrix the inner product unit 35 uses, and stores a coefficient matrix with (M + 1) rows × N columns, for example. Here, N is the width of a time window in the inner product and (M + 1) is the number of values as to which the inner product is calculated. In addition, each row of the coefficient matrix stores the values of the function representing the shape of a pitch curve taken by the sequence of samples of the pitch frequencies cut out by the window unit 33a for each window width N. The inner product unit 35 is a component for calculating the inner product of the sequence of samples cut out by the window unit 33a and the coefficient matrix in the coefficient matrix unit 34 using as weights the weight coefficients corresponding to the sequence of samples cut out by the window unit 33b.

The tune capturing unit 5 is a component for capturing tune data to be retrieved, and comprises an interface with external equipment, a communication processing unit via a netwrork and the like. It captures tune data containing at least a musical sound signal of a piece of music from a music media 4 stored in a CD, a mobile music player or a music distribution site on a network. The tune data storage unit 6 is a storage unit for storing the tune data captured by the tune capturing unit 5. The vocal emphasis unit (emphasis processing unit) 7 is a component for emphasizing the vocal component (theme component) in the musical sound signal of the piece of music contained in the tune data read out of the tune data storage unit 6.

The feature extracting unit (second feature extracting unit) 8 is a component for extracting a feature vector time series representing a melody from a musical sound signal (retrieval target) in which the vocal component is emphasized by the vocal emphasis unit 7. It comprises a pitch extracting unit 81, a weight calculating unit 82, window units 83a and 83b, a coefficient matrix unit 84 and an inner product unit 85. The pitch extracting unit 81 is a component for acquiring the musical sound signal supplied from the vocal emphasis unit 7 as a frame, and for estimating the pitch frequency for each frame acquired in the same manner as the pitch extracting unit 31. The weight calculating unit 82 is a component for computing the weight coefficients which are numerical values representing the probabilities of the pitch frequencies estimated by the pitch extracting unit 81.

The window unit 83a is a component for cutting out a sequence of samples of the pitch frequencies contained in a prescribed time window from the sequence of pitch frequencies supplied from the pitch extracting unit 81. The window unit 83b is a component for cutting out a sequence of samples of weight coefficients contained in the prescribed time window corresponding to the sequence of samples of the pitch frequencies cut out by the window unit 83a from the weight sequence of the weight coefficients supplied from the weight calculating unit 82.

The coefficient matrix unit 84, which is a storage unit for storing a coefficient matrix to be used by the inner product unit 85, stores the same coefficient matrix as that of the coefficient matrix unit 34 of the feature extracting unit 3. The inner product unit 85 is a component for calculating the inner product of the sequence of samples cut out by the window unit 83a and the coefficient matrix in the coefficient matrix unit 84 using the weight coefficients corresponding to the sequence of samples cut out by the window unit 83b as the weights.

The index storage unit 9 is a storage unit for storing the feature vector time series extracted by the feature extracting unit 8 by associating it with the tune data stored in the tune data storage unit 6. The retrieval unit 10 is a component for matching the feature vector time series extracted by the feature extracting unit 3 with the feature vector time series read from the index storage unit 9, for retrieving from the tune data storage unit 6 the tune data corresponding to the feature vector time series of the index storage unit 9 according to the matching result, and for outputting it as a retrieval result 11. It comprises a matching unit 101 for executing the matching and an output unit 102 for producing and outputting the retrieval result 11.

Next, the operation will be described.

(1) Outline of Retrieving Operation.

First, the voice input unit 2 receives the singer voice 1, and produces a digitized voice signal obtained from the singer voice 1 as a PCM (Pulse Code Modulation) signal with a sampling frequency 44.1 kHz through a microphone, an A/D converter and the like. The feature extracting unit 3 receives the voice signal from the voice input unit 2, extracts from the voice signal the feature vector sequence, which is a time series of vectors of feature values representing melody information contained in the singer voice 1, and outputs it.

On the other hand, the vocal emphasis unit 7 produces the musical sound signal in which the vocal component in the piece of music is emphasized by applying processing which will be described later to the musical sound signal of the tune data read out of the tune data storage unit 6, and outputs it. The feature extracting unit 8 extracts, from the musical sound signal in which the vocal component is emphasized and which is supplied from the vocal emphasis unit 7, the feature vector time series having as its components the feature value vectors representing the features of the melody contained in the tune data which is the source of the musical sound signal.

After that, the feature extracting unit 8 stores the extracted feature vector time series in the index storage unit 9 by associating it with the source tune data thereof. For example, when a tune number is assigned to each tune data stored in the tune data storage unit 6, it is stored in the index storage unit 9 along with the tune number of the source tune data.

The retrieval unit 10 matches the feature vector time series supplied from the feature extracting unit 3 with the feature vector time series read out of the index storage unit 9 by using the continuous DP, computes the matching positions in the tune and the similarity, and outputs candidates in descending order of the similarity as the retrieval result 11.

(2) Operation of Feature Extraction Unit 3 (Feature Extraction Process on Retrieval Input Side).

The pitch extracting unit 31 of the feature extracting unit 3, while moving a time window with a length of NP = 8192 points in the time axis direction at intervals of 40 milliseconds (at intervals of 1764 points in terms of the number of samples) with respect to the sampled voice signal supplied from the voice input unit 2, acquires the voice signal samples passing through the time window as a frame, and estimates the pitch frequency for each frame by performing pitch extraction based on a widely known cepstrum method on the acquired frame.

Here, the cepstrum is a waveform obtained by performing an inverse FFT operation on a logarithmic amplitude frequency spectrum which is obtained by applying an FFT operation, an absolute-value operation and a logarithmic operation to the voice signal samples cut out through the time window. In addition, the pitch extraction refers to a method of detecting a peak corresponding to a pitch period from the cepstrum waveform so as to obtain the pitch frequency as a reciprocal of the position (having a dimension of time) of the peak.

Incidentally, although there are various pitch extracting methods, the present embodiment 1 employs the cepstrum method to detect a harmonic structure of the vocal components spreading over the logarithmic amplitude frequency spectrum. It is assumed that the frequency range of the logarithmic spectrum as to which the cepstrum is computed is a region in which the principal component of the vocal occurs. Specifically, the present embodiment 1 obtains the logarithmic amplitude frequency spectrum after down-sampling the signal with the sampling frequency of 44.1 kHz to a signal with a 1/4 sampling frequency of 11.025 kHz, and obtains the cepstrum from the logarithmic amplitude frequency spectrum whose bandwidth is limited to 0 - 5512.5 Hz. After that, it detects the peaks exceeding a threshold from the peaks corresponding to the pitch period on the cepstrum waveform. As for the threshold relating to the cepstrum peak, its value is set at 0.2, for example.

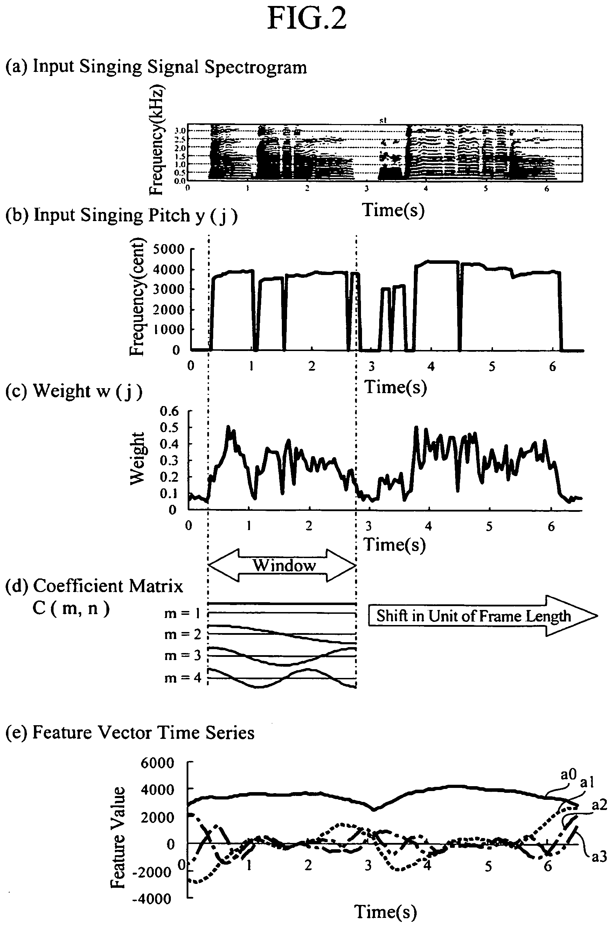

FIG. 2 is a diagram illustrating a feature extraction process on the retrieval input side. FIG. 2 (a) shows an example of the spectrogram of the input singer voice 1. The pitch extracting unit 31 estimates the pitch frequencies using the spectrogram as a subject.

FIG. 2 (b) is a graph of the pitch frequencies obtained from the spectrogram of FIG. 2 (a), where the horizontal axis is time and vertical axis is pitch frequencies (in units of cent). The frequency expressed in Hz and the frequency in cent can be convertible to each other by the following expression (1).

In addition, it is assumed in the following explanation that the pitch frequency in a jth frame of the input singing is denoted by y(j). Here, j = 1, 2, ..., J (where J is the number of frames of the input singing). Incidentally, as for a frame in which no pitch frequency is detected, its pitch frequency is assumed to be zero.

$$f_{cent} = 1200 \log_2 \left( \frac{f_{Hz}}{440 \times 2^{\frac{3}{12} - 5}} \right) \qquad (1)$$

Next, the weight calculating unit 32 computes the weight coefficients which are numerical values expressing the probabilities of the pitch frequencies estimated by the pitch extracting unit 31. As for the weight coefficients, as long as they express the probabilities of the pitch frequencies, they can be any numerical values. For example, as shown in FIG. 2(c), the heights of the peaks corresponding to the pitch periods on the cepstrum waveform obtained by the pitch extracting unit 31 according to the cepstrum method can be used as the weight coefficients of the pitch frequencies. In the following description, the weight coefficient in the jth frame is assumed to be w(j) (j = 1, 2, ..., J).

Assuming that the window width in the inner product is N and the number of the (functional) values as to which the inner product is computed is (M + 1), the coefficient matrix stored in the coefficient matrix unit 34 becomes a matrix with (M + 1) rows × Ncolumns. In addition, each rowof the coefficient matrix stores the values representing the shape of the pitch curve. Incidentally, as for the function giving the values of each row, it can be any function as long as it represents the shape of the pitch curve. The present embodiment 1 employs a cosine function capable of expressing from a broader shape to detailed features depending on the periods as the function giving the values of each row.

More specifically, assuming that the index representing the period of the cosine function is m ($1 \leqq m \leqq M + 1$) and the value at the mth row, nth column of the coefficient matrix is C(m, n) ($1 \leqq n \leqq N$), the value at the m row, n column of the coefficient matrix can be computed using the following expression (2). Here, n is the relative frame time whose value is one at the beginning of the window. In addition, m is the index for determining the period, and the functional shape in the time window corresponds to a fixed value when m = 1, and to a cosine waveform of about half a period when m = 2.

Incidentally, in the following explanation, the window width N is set at N = 64, and M is set at M = 5. FIG. 2(d) shows an example of the functional shapes (cosine functions in this case) stored in the first to fourth rows of the coefficient matrix.

$$C(m, n) = \cos\left(\frac{(m-1)\,\pi\,(n-0.5)}{N}\right)$$
$$(m = 1, 2, ..., M + 1;\ n = 1, 2, ..., N) \tag{2}$$

The window unit 33a cuts out a sequence of N samples y(j + n) (n = -N/2, 1 - N/2, 2 - N/2, ..., N/2 - 1) of the pitch frequencies contained in the time window centering on the jth frame from the sequence of pitch frequencies output from the pitch extracting unit 31. Here, the number j of the central frame is successively updated on a frame-by-frame basis from the start frame 1 to the final frame J of the voice. Incidentally, as for the values whose subscripts are out of range, they are all assumed to be zero (that is, y(j) = 0 for all j of $j \leqq 0$ or j > J).

In addition, the window unit 33b cuts out a sequence of N samples w(j + n) (n = -N/2, -N/2 + 1, -N/2 + 2, ..., N/2 - 1) of the weight coefficients contained in the time window centering on the jth frame from the weight sequence output from the weight calculating unit 32.

The inner product unit 35 calculates the inner product of the sequence of N samples of the pitch frequency cut out by the window unit 33a and the coefficient matrix read out of the coefficient matrix unit 34 using the weight coefficients of the sequence of samples cut out by the window unit 33b as the weights according to the following expression (3). In the following expression (3), Y (j, m) is a value obtained by dividing the inner product by the sum total of the weight coefficients, the inner product being calculated for the sequence {y(j + n)w(j + n) | n = -N/2, -N/2 + 1, ..., N/2 - 1}, which consists of the products of the pitch and the weight coefficients centering on the jth frame, and the mth coefficient sequence {C(m, n) | n = 1, 2, ..., N}. Thus assigning weights to the inner product can reduce the effect a frame with a small weight (that is, with large uncertainty) has in the feature values of the pitch.

$$Y(j, m) = \frac{\sum_{n=-N/2}^{N/2-1} y(j + n)w(j + n)C(m, n + N/2 + 1)}{\sum_{n=-N/2}^{N/2-1} w(j + n)}$$
$$(j = 1, 2, ..., J, \quad m = 1, 2, ..., M + 1) \tag{3}$$

Calculating the inner products mentioned above for the individual frames makes it possible to obtain the sequence {Y (1, *), ..., Y(J, *)} over frames of (M + 1)-dimensional feature vectors Y (j, *) ($1 \leqq * \leqq M + 1$) . An example of the feature vector time series thus obtained is shown in FIG. 2(e). In FIG. 2(e), the feature vector time series a0 corresponds to the index m = 1, the feature vector time series a1 to the index m = 2, the feature vector time series a2 to the index m = 3, and the feature vector time series a3 to the index m = 4. The feature vector time series as shown in FIG. 2(e) are supplied from the inner product unit 35 to the retrieval unit 10.

(3) Operation of Vocal Emphasis Unit 7 (Vocal Emphasis Processing).

The present embodiment 1 is applied to the retrieval of a vocal tune recorded in stereo such as an enka (Japanese popular song), pop music or the like. According to the fact that the theme component of a tune is localized at the center, the vocal emphasis unit 7 outputs amonaural acoustic signal that emphasizes the central localization component of the stereo tune.

More specifically, the vocal emphasis unit 7 generates the monaural musical sound signal that emphasizes the central localization component from the musical sound signals of the right and left channels of a stereo tune stored in the tune data storage unit 6, thereby producing the musical sound signal that emphasizes the singing component (vocal) of a singer and is localized at the center of the stereo.

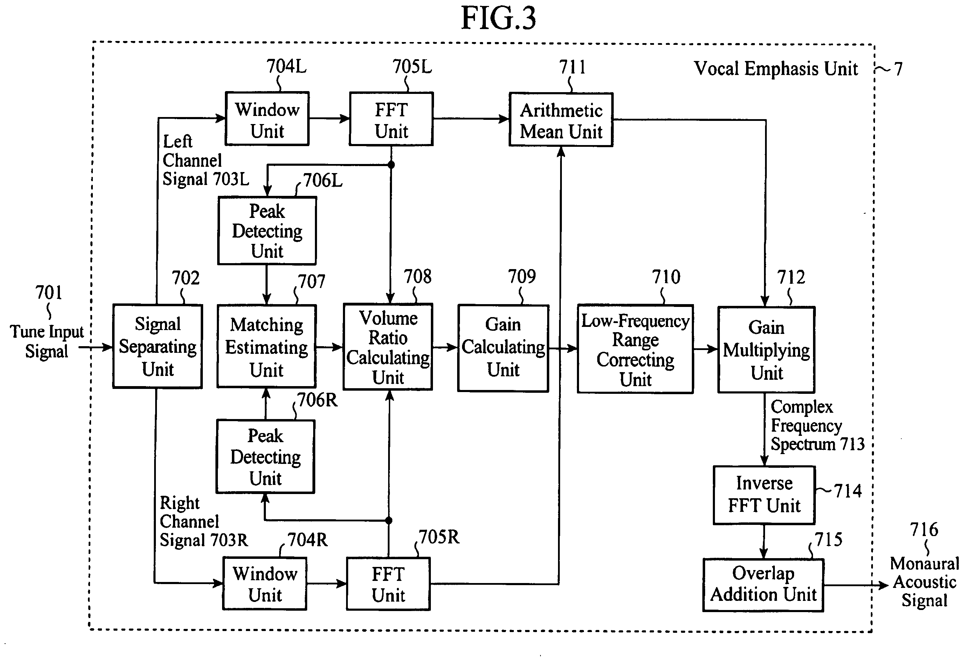

FIG. 3 is a block diagram showing a configuration of the vocal emphasis unit 7 in FIG. 1. In FIG. 3, the vocal emphasis unit 7 comprises a signal separating unit 702, window units 704L and 704R, FFT units 705L and 705R, peak detecting units 706L and 706R, a matching estimating unit 707, a volume ratio calculating unit 708, again calculatingunit 709, a low-frequency range correcting unit 710, an arithmetic mean unit 711, a gain multiplying unit 712, an inverse FFT unit 714 and an overlap addition unit 715.

The signal separating unit 702 receives a stereo tune input signal 701 read out of the tune data storage unit 6, separates it into a left channel musical sound signal 703L and a right channel musical sound signal 703R, and supplies them to the window units 704L and 704R, respectively. The window units 704L and 704R cut out frames consisting of signal samples based on the time window function from the right and left channel musical sound signals 703L and 703R fed from the signal separating unit 702, and supply them to the FFT units 705L and 705R.

The FFT units 705L and 705R carry out frequency analysis of the frames cut out by the window units 704L and 704R using an FFT (Fast Fourier Transform) with the length of NF points (NF = 8192) to obtain right and left channel short-time frequency spectra (complex frequency spectra) $Z_k^{\ L}$ and $Z_k^{\ R}$. Here, k denotes discrete frequencies, and L and R denote right and left channels, respectively.

Next, the peak detecting units 706L and 706R detect local peaks corresponding to the harmonic structure components on the amplitude spectra $|Z_k^{\ L}|$ and $|Z_k^{\ R}|$ for the right and left channel short-time frequency spectra $Z_k^{\ L}$ and $Z_k^{\ R}$. The matching estimating unit 707 receives the peak detecting results from the peak detecting units 706L and 706R, and obtains a set Peaks at local peak positions where the frequency positions of the right and left channels agree or are near (that is, differences between the frequency positions are not greater than $\Delta$). For example, it is assumed that $\Delta = 2$.

According to the following expression (4a), the volume ratio calculating unit 708 obtains a volume ratio ri between the left and right channels for each local peak position i (i $\in$ Peaks) in the set Peaks of the local peak positions obtained by the matching estimating unit 707.

According to the following expression (4c), the gain calculating unit 709 obtains the gain $G_k$ by computing convolution of an impulse train with a height of g ($r_i$) and an impulse response $h_k$ with a bandwidth of 2b + 1 about the center of each local peak i $\in$ Peaks in the frequency domain.

Here, g($r_i$) is a gain function given by the following expression (4b). As for the function, the gain becomes one when the volume ratio r is one, approaches zero as the volume ratio r moves away from one, and becomes zero when the volume ratio r is not greater than a threshold $r_\theta$.

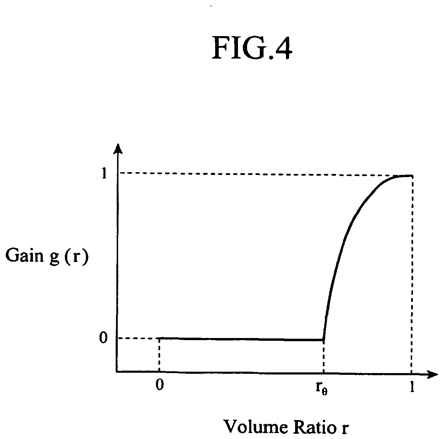

Incidentally, as for the gain function, the gain g(r) has characteristics as shown in FIG. 4 with respect to the volume ratio r.

In addition, according to the following expression (4e), the low-frequency range correcting unit 710 obtains a low-frequency cutoff characteristic $HPF_k$ in accordance with which the gain linearly increases from zero to unity in a transition region [Fb1, Fb2] in order to suppress a bass note component remaining in the low frequency domain in the gain of the output of the gain calculating unit 709.

On the other hand, the arithmetic mean unit 711 computes an arithmetic mean of the complex frequency spectra of the right and left channels obtained by the FFT units 705L and 705R. According to the following expression (4f), the gain multiplying unit 712 obtains a monaural complex frequency spectrum 713 (complex frequency spectrum $Z_k^{\ c}$) by multiplying the complex frequency spectrum from the arithmetic mean unit 711 by the gain $G_k$ and the low-frequency cutoff characteristics $HPF_k$.

The inverse FFT unit 714 performs the inverse FFT processing on the complex frequency spectrum 713 obtained by the gain multiplying unit 712, thereby restoring the signal waveform. As to the signal waveform in units of frames restored in this way, the overlap addition unit 715 performs weighted superposition addition of the frames in accordance with an overlap addition method to finally generate a monaural acoustic signal 716 whose vocal component is emphasized, and outputs it. Incidentally, it is assumed that $r_\theta = 0.8$ and b = 6, for example.

$$r_i = \min\left\{|Z_i^L|/|Z_i^R|, \; |Z_i^R|/|Z_i^L|\right\} \qquad (4a)$$
$$\text{where } 0/0 = 0.$$

$$g(r) = \max\left\{0, \; 1 - [(r-1)/(r_\theta - 1)]^2\right\} \qquad (4b)$$

where $r_\theta$ ($r_\theta < 1$) is a volume ratio that becomes $g(r) = 0$ when $r = r_\theta$.

$$G_k = \left\{\sum_{i \in Peaks} g(r_i)\delta_{i,k}\right\} \otimes h_k \qquad (4c)$$

where $\delta_{i,k}$ is Dirac delta function that satisfies $\delta_{i,k} = \begin{cases} 1 & i = k \\ 0 & i \neq k \end{cases}$

$$h_k = h_{-k} = 1 - [k/(b+1)]^2 \qquad (4d)$$

$$HPF_k = HPF_{NF-k} = \begin{cases} 0 & 0 \leq k \leq Fb1 \\ (k - Fb1)/(Fb2 - Fb1) & Fb1 < k < Fb2 \\ 1 & Fb2 \leq k \leq NF/2 \end{cases} \qquad (4e)$$

$$Z_k^C = \frac{1}{2}\left(Z_k^L + Z_k^R\right)G_k \, HPF_k \qquad (4f)$$

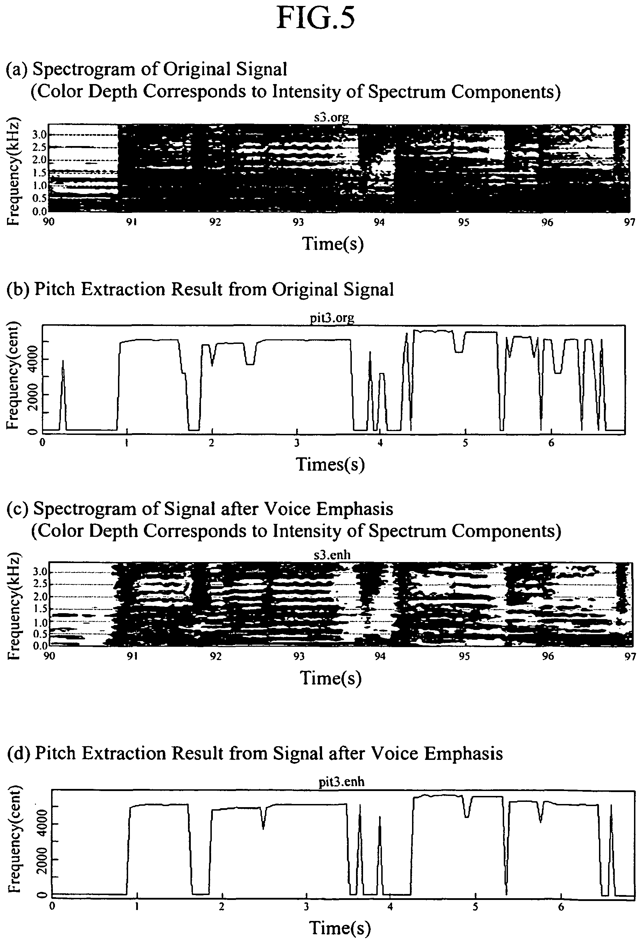

FIG. 5 is a diagram showing an example of a spectrogram of the original musical sound signal and a pitch extraction result thereof, and a spectrogram of the musical sound signal after passing through the vocal emphasis and a pitch extraction result thereof. In the spectrograms of the musical sound signals, color depth corresponds to the intensity of the spectrum components as shown in FIG. 5(a) and FIG. 5(c).

In the example of FIG. 5, since the original musical sound signal shown in FIG. 5(a) includes both the singing of a singer and a background piano performance, there are some places where it is difficult to extract pitch of the singing from the original musical sound signal as shown in FIG. 5(b).

In contrast, in the musical sound signal after passing through the vocal emphasis as shown in FIG. 5(c), the piano performance component is suppressed and the singing components of the singer are emphasized. Accordingly, the pitch extraction of the singing becomes easier as shown in FIG. 5(d).

(4) Operation of Feature Extraction Unit 8 (Feature Extraction Process on Retrieval Target Side).

The feature extracting unit 8 receives the monaural musical sound signal whose vocal components are emphasized by the vocal emphasis unit 7, and extracts features of the melody of the tune data from the musical sound signal.

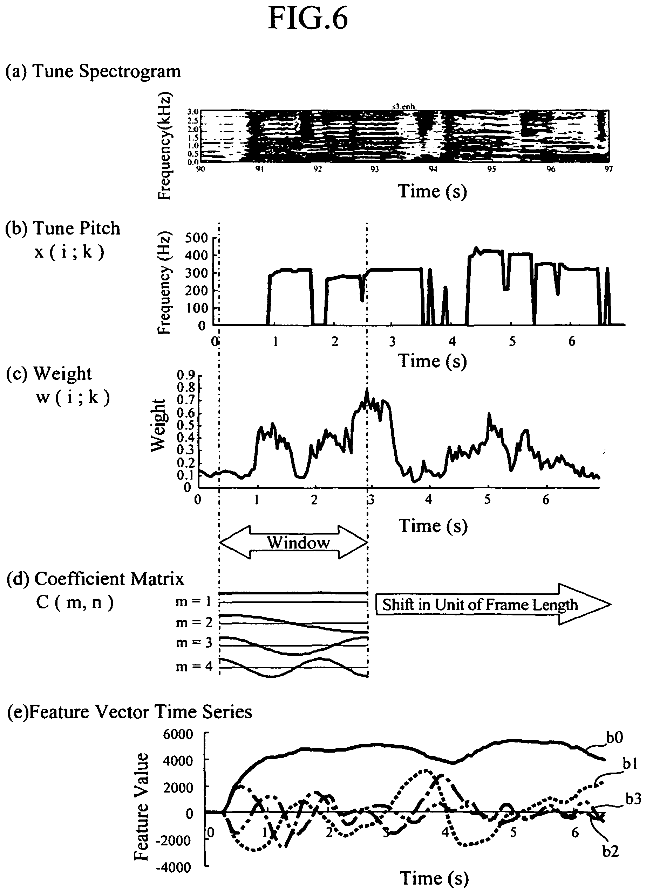

First, the pitch extracting unit 81 receives the monaural musical sound signal, which is supplied from the vocal emphasis unit 7 and gives a tune spectrogram as shown in FIG. 6 (a), using frames passing through the prescribed time window as units of processing. After that, it obtains a cepstrum through the same processing as that of the pitch extracting unit 31, estimates the pitch frequencies from the peak positions corresponding to the pitch periods on the cepstrum waveform, and outputs a sequence of pitch frequencies estimated for the individual frames (see FIG. 6(b)).

Incidentally, in the explanation from now on, the pitch frequency of an ith frame in the tune data of the tune number k is assumed to be x (i; k). Here, it is assumed that $1 \leq k \leq K$ where K is the number of tunes of the retrieval target.

Next, the weight calculating unit 82 computes the weight coefficients which are numerical values indicating probabilities of the pitch frequencies estimated by the pitch extracting unit 81 through the same processing as that of the weight calculating unit 32. Here, it obtains the weight coefficients in terms of the peak heights corresponding to the pitch periods on the cepstrum waveform obtained by the pitch extracting unit 81, and outputs a sequence of the weight coefficients obtained for the individual frames (see FIG. 6(c)).

In the following, the weight coefficient in the ith frame is denoted by w(i; k) (i = 1, 2, ..., I(k)), where I (k) is the number of frames in the tune data of the tune number k.

The coefficient matrix unit 84 stores the same coefficient matrix as the coefficient matrix unit 34 of the feature extracting unit 3 (see FIG. 6(d)). The window unit 83a cuts out a sequence of N samples x(i + n; k) (n = -N/2, -N/2 + 1, -N/2 + 2, ..., N/2-1) with the pitch frequencies contained in the time window beginning from the ith frame from the sequence of pitch frequencies output from the pitch extracting unit 81. It is assumed here that x (i; k) = 0 for i satisfying $i \leqq 0$ or i > I(k).

In addition, the window unit 33b cuts out from the weight sequence output by the weight calculating unit 82 a sequence of N samples w(i + n; k) (n = -N/2, -N/2 + 1, -N/2 + 2, ..., N/2-1) of the weight coefficients contained in the time window beginning from the ith frame.

In the same manner as the inner product unit 35 of the feature extracting unit 3, according to the following expression (5), the inner product unit 85 calculates the inner product of the sequence of N samples of the pitch frequency cut out by the window unit 83a and the coefficient matrix read out of the coefficient matrix unit 84 using the sequence of samples of the weight coefficients cut out by the window unit 83b as the weights. Here, the components C(m, n) of the coefficient matrix are given by the foregoing expression (2), where X(i, m; k) is the feature value of dimension k of the ith frame of the tune number k.

$$X(i,m;k) = \frac{\sum_{n=-N/2}^{N/2-1} x(i+n;k)w(i+n;k)C(m,n+N/2+1)}{\sum_{n=-N/2}^{N/2-1} w(i+n;k)} \quad (5)$$

$$(i = 1,2,...,I(k), \quad m = 1,2,...,M+1, \quad k = 1,2,...,K)$$

Calculating the above-mentioned inner product for each frame results in the feature vector time series shown in FIG. 6(e). In FIG. 6(e), the feature vector time series b0 corresponds to the index m = 1, the feature vector time series b1 to the index m = 2, the feature vector time series b2 to the index m = 3, and the feature vector time series b3 to the index m = 4. The feature vector time series as shown in FIG. 6(e) are supplied from the inner product unit 85 to the index storage unit 9. The index storage unit 9 stores the feature vector time series acquired from the inner product unit 85 along with the tune number of the original tune data stored in the tune data storage unit 6.

(5) Operation by Retrieval Unit 10 (Retrieval Processing).

The matching unit 101 matches the feature vector time series extracted by the feature extracting unit 3 with the feature vector time series read out of the index storage unit 9 using the widely known continuous DP. Here, it is assumed that the number of tunes stored in the tune data storage unit 6 is K which is an integer not less than one, the feature vector time series of the input singing (retrieval input) extracted by the feature extracting unit 3 is X (j, m) (where m is a dimension), and the feature vector time series of the kth tune (retrieval target) is Y(i, m; k).

Incidentally, j is the frame number on the input singing side, where j = 1, 2, ..., J, and J is the number of frames on the singing side. In addition, i is the frame number on the tune side, where i = 1, 2, ..., I(k), and I (k) is the number of frames of the kth tune.

The matching processing using the continuous DP refers to the processing of computing the frame position that will be matched with the start of the input singing (retrieval input) when the end of the input singing is placed on the ith frame in the feature vector time series of the tune (retrieval target tune), and of computing the similarity between them. It computes them using a recurrence relation given by the following expression (6). Incidentally, in the following expression (6), d(i, j; k) is a local distance which is computed as an Euclidean distance between the feature vectors using the following expression (7). Here, to eliminate a shift of absolute pitch, the local distance is calculated using the feature values in the range of m = 2 to M + 1 excluding the feature value of m = 1 indicating the average value of the pitch.

$$S(i,j;k) = \min \begin{cases} S(i-2,j-1)+1/2d(i-1,j;k)+1/2d(i,j;k) & \text{path ①.} \\ S(i-1,j-1)+d(i,j;k) & \text{path ②.} \\ S(i-1,j-2)+d(i,j-1;k)+d(i,j;k) & \text{path ③.} \end{cases}$$

$$(i=1,2,\ldots,I(k), \quad j=1,2,\ldots,J)$$

$$B(i,j;k) = \begin{cases} B(i-2,j-1;k) & \text{when path ① is selected.} \\ B(i-1,j-1;k) & \text{when path ② is selected.} \\ B(i-1,j-2;k) & \text{when path ③ is selected.} \end{cases}$$

$$(i=1,2,\ldots,I(k), \quad j=1,2,\ldots,J, \quad k=1,2,\ldots,K) \tag{6}$$

$$S(i,0;k)=0 \quad (i=-1,0,1,2,\ldots,I(k), \quad k=1,2,\ldots,K)$$

$$S(i,-1;k)=\infty \quad (i=-1,0,1,2,\ldots,I(k), \quad k=1,2,\ldots,K)$$

$$B(i,0;k)=i+1 \quad (i=-1,0,1,2,\ldots,I(k), \quad k=1,2,\ldots,K)$$

$$d(i,j;k) = \begin{cases} \sqrt{\sum_{m=2}^{M+1}(X(i,m;k)-Y(j,m))^2} & X(i,0;k)>0 \text{ and } Y(j,0)>0 \\ \infty & \text{other than the above.} \end{cases} \tag{7}$$

The matching unit 101 searches for the maximum peak E(k) of the similarity S (i, j; k) obtained as described above by using the following expression (8). Incidentally, the reason why the search range of i is not less than J/2 is that searching in the range less than J/2 is meaningless because of the inclination limit of the DP matching path.

As a result, the similarity S(E(k), J; k) in the matching section, in which the ith frame occurs at the end of the input singing, and the starting frame B(E(k), J; k) of the matching section can be obtained.

Here, E (k) is the end frame number of the matching section on the tune side corresponding to the end frame of the input singing with the maximum similarity S(i, j; k).

$$E(k) = \underset{J/2 \leq i \leq J(k)}{\arg\max} S(i,J;k) \tag{8}$$

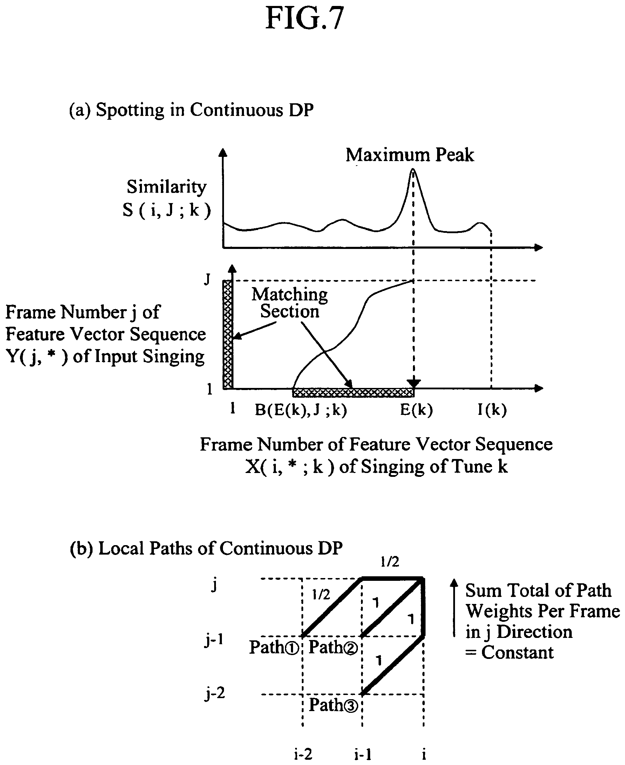

FIG. 7 is a diagram illustrating the continuous DP by the retrieval unit in FIG. 1: FIG. 7 (a) shows an outline of spotting in the continuous DP; and FIG. 7(b) shows local paths in the continuous DP. In FIG. 7(a), the similarity S (i, J; k) is obtained by the similarity computing using the recurrence relation given by the foregoing expression (6), and the frame in which the similarity peaks is used as the matching section. In FIG. 7 (a), the matching section is shown by a shaded rectangle.

In the example of FIG. 7 (a), the feature vector time series {Y(1, *), Y(2, *), ..., Y (J, *)} of the input singing is collated with the partial section of the feature vector time series {Y(B(E(k), J; k), *; k), Y(B(E(k), J; k) +1, *; k), ..., Y(E(k), *; k)} on the tune side. In addition, FIG. 7(b) shows local paths in the continuous DP, which correspond to each path in the foregoing expression (6).

As described above, the matching unit 101 obtains a set of three items of information consisting of the tune number k, the similarity S(E(k), J; k), and the matching section {[B (E (k), J; k), E(k)]} about the tune number k (k = 1, 2, ..., K), and supplies the processing results to the output unit 102.

The output unit 102 rearranges the sets of three items of information consisting of the tune number k, the similarity S (E (k), J; k) and matching section {[B(E(k), J; k), E(k)]} about each tune number k (k = 1, 2, ···, K) received from the matching unit 101 in order of similarity, and outputs the sets in descending order of the similarity as the retrieval result 11.

As described above, according to the present embodiment 1, it estimates the pitch frequencies describing the melodies of the input singing and retrieval target tune, obtains the feature value by calculating the inner product of the pitch frequencies and the function representing the shape of the pitch curve for each frame defined in the prescribed time window using the probabilities of the pitch frequencies as the weights, collates the melody of the input singing with that of the retrieval target tune in the feature vector time series consisting of the feature value vectors, and retrieves the desired tune data from the tune data storage unit 6 according to the result of the collation.

With such a configuration, it enables retrieval of a tune. In addition, it can prevent a retrieval error due to a pitch extraction error.

EMBODIMENT 2

Although the foregoing embodiment 1 shows the case that uses the magnitudes of peaks of the cepstrum waveform corresponding to the pitch period as the weights, the present embodiment 2 describes a case of computing the weight coefficients from the amount of local variations in the pitch frequency in the sequence of pitch frequencies estimated.

The music retrieval apparatus according to the embodiment 2 has basically the same configuration as the foregoing embodiment 1 described with reference to FIG. 1. However, it differs in that the weight calculating units 32 and 82 compute the weight coefficients from the amount of local variations in the pitch frequency. Thus, as to the configuration of the music retrieval apparatus of the embodiment 2, FIG. 1 is referred to.

Next, the operation will be described.

Here, it will be described using an example of the feature extraction process on the tune side (retrieval target side).

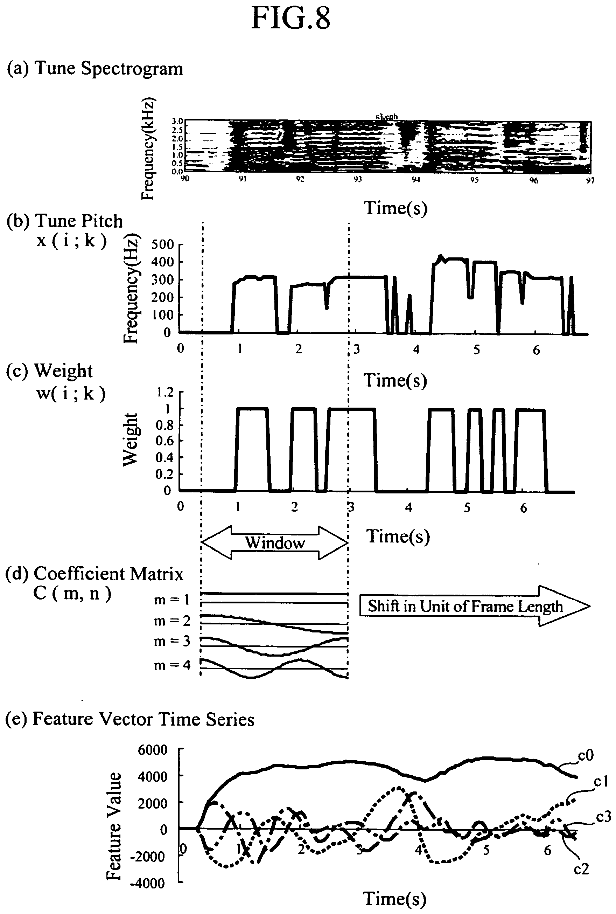

First, the pitch extracting unit 81 receives the monaural musical sound signal which is supplied from the vocal emphasis unit 7 to give a tune spectrogram as shown in FIG. 8 (a) by using frames passing through the prescribed time window as units of processing.

After that, it obtains a cepstrum through the same processing as that of the foregoing embodiment 1, estimates the pitch frequencies from the peak positions corresponding to the pitch periods on the cepstrum waveform, and outputs a sequence of pitch frequencies estimated for the individual frames (see FIG. 8 (b)).

Next, the weight calculating unit 82 computes the weight coefficient $w(i; k)$ of the ith frame according to the following expressions (9a) and (9b), where $y(i; k)$ is the pitch frequency of the ith frame of a tune number k (see FIG. 8(c)). Here, $\delta$ can be set at $\delta = 2$. It is assumed in the following expression (9a) that when the pitch frequency of the ith frame is zero, that is, when the pitch is not detected, the weight coefficient $w(i; k)$ is made zero. In addition, it is assumed that when the amount of variations of the pitch frequency in the width of $\pm \delta$ centering on the ith frame exceeds a threshold $\Theta_v$, the weight coefficient $w(i; k)$ is made zero, and that when the amount of variations is not greater than the threshold $\Theta_v$, the weight coefficient $w(i; k)$ is made one. The amount of variation $v(i; k)$ is computed by the following expression (9b).

$$w(i;k) = \begin{cases} 0 & \text{when } y(i;k) = 0 \\ 0 & v(i;k) > \Theta_v \\ 1 & v(i;k) \le \Theta_v \end{cases} \qquad (9\text{ a})$$

where

$$v(i;k) = \max_{n=-\delta}^{\delta} y(i+n) - \min_{n=-\delta}^{\delta} y(i+n) \qquad (9\text{ b})$$

The coefficient matrix unit 84 stores the same coefficient matrix as the coefficient matrix unit 34 of the feature extracting unit 3 (see FIG. 8(d)). The window unit 83a cuts out from the sequence of pitch frequencies supplied from the pitch extracting unit 81 a sequence of N samples $x(i + n; k)$ ($n = -N/2, -N/2 + 1, -N/2 + 2, \cdots, N/2-1$) of the pitch frequency included in the time window beginning from the ith frame. Besides, the window unit 83b cuts out from the weight sequence supplied from the weight calculating unit 82 a sequence of N samples $w(i + n; k)$ ($n = -N/2, -N/2 + 1, -N/2 + 2, \cdots, N/2-1$) of the weight coefficients contained in the time window beginning from the ith frame.

In the same manner as the inner product unit 35 of the feature extracting unit 3, the inner product unit 85 calculates the inner product of the sequence of N samples of the pitch frequency cut out by the window unit 83a and the coefficient matrix read out of the coefficient matrix unit 84 according to the foregoing expression (5) using the weight coefficients of the sequence of samples cut out by the window unit 83b as the weights. Here, the components $C(m, n)$ of the coefficient matrix are given by the foregoing expression (2), where $X(i, m; k)$ is the dimension m feature value of the ith frame of the tune number k.

By calculating the above-mentioned inner product for the individual frames, the feature vector time series as shown in FIG. 8(e) are obtained. Incidentally, in FIG. 8(e), the feature vector time series c0 corresponds to the index m = 1, the feature vector time series c1 to the index m = 2, the feature vector time series c2 to the index m = 3, and the feature vector time series c3 to the index m = 4.

The feature vector time series as shown in FIG. 8(e) are supplied from the inner product unit 85 to the index storage unit 9. The index storage unit 9 stores the feature vector time series acquired from the inner product unit 85 along with the tune number of the tune data stored in the tune data storage unit 6, from which the feature vector time series are derived.

The processing other than the foregoing processing is the same as that of the embodiment 1.

As described above, according to the present embodiment 2, since it computes the weight coefficients from the amount of local variations of the pitch frequency, it can achieve similar advantages to those of the foregoing embodiment 1.

EMBODIMENT 3

The foregoing embodiments 1 and 2 perform the extraction of the pitch frequency of the tune by obtaining a single pitch candidate. Accordingly, the number of the pitch frequency per frame is zero or one.

In contrast with this, the present embodiment 3 carries out multiple pitch extraction. In this case, since the number of the pitch frequency candidates per frame becomes zero, one, two or more, the feature vector time series are generated by considering the weights of the pitch frequency candidates.

In addition, although the music retrieval apparatus of the embodiment 3 has basically the same configuration as the foregoing embodiment 1 described with reference to FIG. 1, it differs in that at least one of the feature extracting units 3 and 8 performs the multiple pitch extraction, and that the retrieval unit 10 executes the retrieval corresponding to that. Accordingly, as for the configuration of the music retrieval apparatus of the embodiment 3, we will refer to FIG. 1.

Next, the operation will be described using the feature extraction process on the tune side (retrieval target side) as an example.

(1) Operation by Feature Extraction Unit 8 (Feature Extraction Process on the Retrieval Target Side).

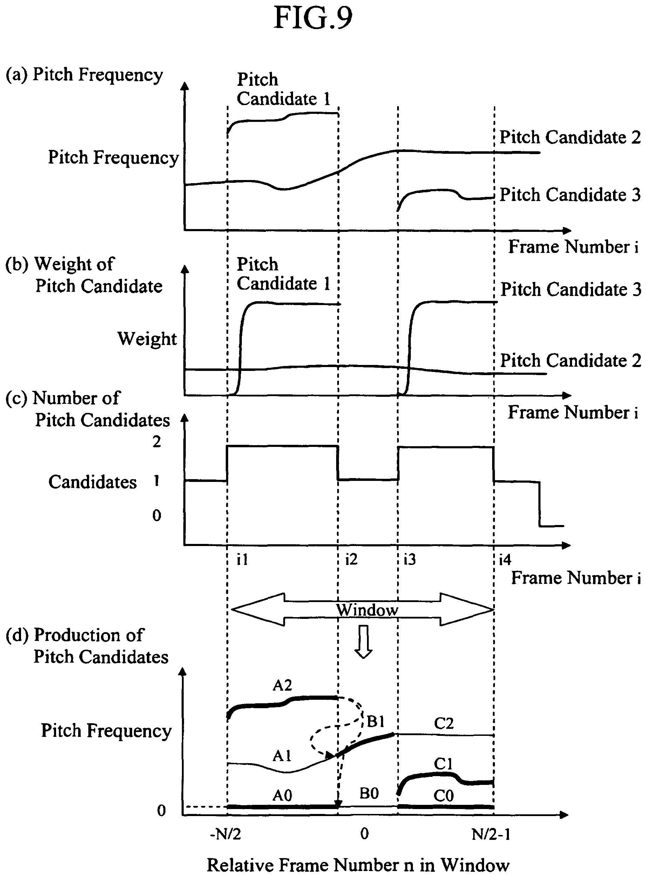

FIG. 9 is a diagram illustrating the feature extraction process from a plurality of pitch candidates by the embodiment 3. FIG. 9(a) shows an example of pitch frequencies of a tune by the above-mentioned multiple pitch extraction. In FIG. 9(a), the pitch candidate 1 extends over the range from a frame with a frame number i1 to a frame with a frame number i2, and the pitch candidate 3 extends over the range from a frame with a frame number i3 to a frame with a frame number i4. In addition, the pitch candidate 2 extends from before the frame with the frame number i1 beyond the frame with the frame number i4.

Furthermore, as shown in FIG. 9(b), each of the pitch candidates 1 - 3 is assigned weights corresponding to the reliability of the estimation of the pitch frequency. FIG. 9(c) shows changes in the number of the pitch candidates in the individual frames.

First, the pitch extracting unit 81 receives the monaural musical sound signal supplied from the vocal emphasis unit 7 by using frames passing through the time window with a prescribed width N as units of processing, estimates the pitch frequencies from its cepstrum waveform by the multiple pitch extraction, and obtains the pitch frequencies and the number of the pitch candidates for each frame. It is assumed here that the range from the frame number i1 to the frame number i4 shown in FIG. 9 extends across the time window.

Next, the pitch extracting unit 81 obtains a frame position, at which the number of the pitch candidates in the time window alters, as a point of change. The pitch extracting unit 81 cuts each pitch curve as shown in FIG. 9(d) using the point of change of the number of the pitch candidates as a boundary to obtain a set of partial pitch curves cut. In FIG. 9(d), A1, A2, B1, C1, and C2 each denote a partial pitch curve cut at the point of change of the number of pitch candidates, and A0, B0, and C0 each denote an added candidate (pitch-less candidate) considering possibility that no pitch exists in practice. Their weight coefficients are set at a prescribed value (0.1, for example).

The weight calculating unit 82 creates the pitch curve candidates within the time window such as {A0, B0, C0}, {A0, B0, C1}, {A0, B0, C2}, and {A0, B1, C0} by combining the partial pitch curves. More specifically, as to the pitch curves within the time window, which are obtained as combinations of all the partial pitch curves within the time window (pitch curves the pitch candidates can assume), the weight calculating unit 82 generates weight curves corresponding to the pitch curves (weight curves that will assign weights to the pitch candidates along the pitch curves).

Next, the inner product unit 85 calculates the weighted inner product of all the pitch curve candidates and weight curve candidates within the time window which are generated and the coefficient matrix.

For example, assuming that the number of the pitch curve candidates of the tune number k, which are obtained by combining the partial pitch curves within the time window centering on the frame with the frame number i, is NC (i; k), that the cth pitch curve ($1 \leqq c \leqq NC(i; k)$) among them is xc(i, n; k, c), that the cth weight curve is wc (i, n; k, c), that a cth dimension m feature value extracted from the cth pitch curve and cth weight curve is XC(i, m; k, c), and that a branch weight for the cth feature value XC(i, m; k, c) is WC(i; k, c), then the feature value XC(i, m; k, c) and the branch weight WC(i; k, c) can be computed using the following expression (10).

$$XC(i,m,k,c) = \frac{\sum_{n=-N/2}^{N/2-1} xc(i,n,k,c)wc(i,n,k,c)C(m,n+N/2+1)}{\sum_{n=-N/2}^{N/2-1} wc(i,n,k,c)}$$

$$(i = 1,2,...,I(k), m = 1,2,...,M+1, \quad c = 1,2,...,NC(i,k)) \tag{10}$$

$$WC(i,k,c) = \frac{\sum_{n=-N/2}^{N/2-1} wc(i,n,k,c)}{\sum_{c'=1}^{NC(i,k)} \sum_{n=-N/2}^{N/2-1} wc(i,n,k,c')}$$

The number of the candidates NC(i; k), the feature value XC(i, m; k, c) and the branch weight WC(i; k, c) obtained as a result of the feature extraction result are supplied from the feature extracting unit 8 to the index storage unit 9. The index storage unit 9 stores the information acquired from the feature extracting unit 8 along with the tune number k of the tune data stored in the tune data storage unit 6, from which the information is derived.

(2) Operation by Retrieval Unit 10 (Retrieval Processing).

The matching unit 101 carries out matching of the feature vector time series based on the pitch candidates extracted by the feature extracting unit 3 and the feature vector time series based on the pitch candidates read out of the index storage unit 9 using the continuous DP. Here, the local distance in the recurrence relation of the foregoing expression (6) is computed by the following expression (11) as the weighted sum of the Euclidean distances. Incidentally, to eliminate a shift of absolute pitch, the calculation of the local distances uses the feature values in the range from m = 2 to m = M + 1 by excluding the feature value of m = 1 indicating the average value of the pitch.

$$d(i,j,k) = \begin{cases} \sum_{c=1}^{NC(i,k)} WC(i,k,c)\sqrt{\sum_{m=2}^{M-1} (XC(i,m,k,c)-Y(j,m))^2} & NC(i,k)>0 \text{ and } Y(j,0)>0 \\ \infty & \text{other than the above.} \end{cases} \tag{11}$$

The output unit 102 rearranges sets of three items of information consisting of the tune number k, similarity and matching sections for each tune number k, which are obtained by the matching processing by the matching unit 101, in order of similarity, and outputs the sets in descending order of the similarity as the retrieval result 11.

As described above, according to the present embodiment 3, since it obtains a plurality of feature vectors from all the pitch curves taken by the plurality of pitch candidates within the time window of the feature extraction and employs them for the matching, it can execute more robust music retrieval.

In addition, although the foregoing embodiments 1 - 3 employ a hummed melody as the retrieval input, they can also use part of a tune as a retrieval clue (retrieval input). In this case, the feature extracting unit 3 is replaced by a combination of the vocal emphasis unit 7 and the feature extracting unit 8.

Furthermore, although the foregoing embodiments 1 - 3 show examples that employ the cepstrum method for extracting the pitch frequencies, a widely known autocorrelation method or cross-correlation method can also be used as an extracting method of the pitch frequencies. Alternatively, a widely known multiple pitch extracting method can be used.

Furthermore, although the foregoing embodiments 1 - 3 employ the Euclidean distances for computing the local distances between the feature vectors, they can also use a statistical scale such as a widely known Mahalanobis distance, widely known multidimensional Gaussian distribution or multidimensional Gaussian mixed distribution.

Furthermore, although the foregoing embodiments 1 - 3 show an example in which to acquire the gain $G_k$, the vocal emphasis unit 7 obtains the local peaks of the amplitude spectra of the left and right channels, and passes the frequency components with the bandwidth of 2b + 1 centering on the local peak position at which the right and left local peak positions agree, they can also use a simpler method which omits the extraction of the local peaks, obtains the volume ratios $r_k$ at all the discrete frequencies k, and sets the gain $G_k$ at $G_k = g(r_k)$.

Incidentally, in the foregoing embodiments 1 - 3, the vocal emphasis unit 7 can multiply bandpass characteristics having unity gain in a frequency range of 100 - 3400 Hz in which vocal components occur mainly, and having gain less than unity in the other frequency ranges, for example.

In addition, the foregoing embodiments 1 - 3 show examples of extracting the pitch from the musical sound signal of a tune (piece of music of the retrieval target). As for a tune having melody data such as MIDI information attached thereto, however, it can generate the pitch from the melody data corresponding to the theme. In this case, the weight of the pitch is set at unity so as to be able to compute the feature vector by a normal inner product without weights. Even in this case, however, the retrieval input side need to extract the pitch, and achieves its effect by considering the weights of the pitch.

INDUSTRIAL APPLICABILITY

A music retrieval apparatus in accordance with the present invention is capable of retrieving a tune, and of preventing a retrieval error due to extraction of the pitch frequencies. Accordingly, it is suitable for the application to a music retrieval apparatus and the like for retrieving a piece of music.

**Claims**

1. Amusicretrieval apparatus for matching a melody of a retrieval input with a melody of a retrieval target, and for retrieving a desired piece of music from the retrieval target according to the matching result, the music retrieval apparatus comprising:

   a first feature extracting unit (3) for generating a feature vector time series representing a feature of the melody of the retrieval input by extracting a sequence of pitch frequencies from the retrieval input and by calculating an inner product of a sequence cut out from the sequence of pitch frequencies for each prescribed time window and values given by a prescribed function representing a shape of a pitch curve the sequence cut out can take;
   a second feature extracting unit (8) for generating a feature vector time series representing a feature of the melody of the retrieval target by extracting a sequence of pitch frequencies from the retrieval target and by calculating an inner product of a sequence cut out from the sequence of pitch frequencies for each prescribed time window and values given by the prescribed function; and
   a retrieval unit (10) for matching the feature vector time series of the retrieval input with the feature vector time series of the retrieval target to calculate a matching position and similarity of the feature vector time series of the retrieval input in the feature vector time series of the retrieval target, and for retrieving a piece of music from the retrieval target according to the similarity.

2. The music retrieval apparatus according to claim 1, wherein

   the first and second feature extracting units (3,8) each generate the feature vector time series by assigning weights to the sequence, which is cut out from the sequence of pitch frequencies for the individual prescribed time windows, in a manner that the sequence follows along the pitch curve the sequence can take, and then by calculating the inner product of the sequence and the values given by the prescribed function.

3. The music retrieval apparatus according to claim 1, wherein

   at least one of the first and second feature extracting units (3, 8) generates the feature vector time series by extracting a plurality of pitch frequency candidates for each prescribed time window, by assigning weights to the pitch frequency candidates within the time window in a manner that the pitch frequency candidates follow along a pitch curve the candidates can take, and then by calculating the inner product of the pitch frequency candidates and the values given by the prescribed function.

4. The music retrieval apparatus according to claim 2, wherein

   the weights used for the weighting are probabilities of the pitch frequencies extracted.

5. The music retrieval apparatus according to claim 3, wherein

   the weights used for the weighting are probabilities of the pitch frequencies extracted.

6. The music retrieval apparatus according to claim 2, wherein

   the weights used for the weighting are amounts of variations of the pitch frequencies extracted.

**7.** The music retrieval apparatus according to claim 3, wherein

the weights used for the weighting are amounts of variations of the pitch frequencies extracted.

**8.** The music retrieval apparatus according to claim 1, further comprising:

an emphasis processing unit (7) for emphasizing a theme component of at least one of the retrieval input and retrieval target to make an extracting target of the pitch frequencies.

**9.** The music retrieval apparatus according to claim 1, wherein the prescribed function is a cosine function.


**Patentansprüche**

**1.** Musikabrufvorrichtung zum Abgleichen einer Tonfolge einer Abrufeingabe mit einer Tonfolge eines Abrufziels, und zum Abrufen eines gewünschten Musikstücks von dem Abrufziel entsprechend dem Abgleichergebnis, wobei die Musikabrufvorrichtung umfasst:

eine erste merkmalherausziehende Einheit (3) zum Erzeugen einer Merkmalsvektorzeitreihe, die ein Merkmal der Tonfolge der Abrufeingabe darstellt, durch Herausziehen einer Abfolge von Tonhöhenfrequenzen aus der Abrufeingabe und durch Berechnung eines inneren Produktes aus einer aus der Abfolge von Tonhöhenfrequenzen für jedes vorgeschriebene Zeitfenster herausgeschnittenen Abfolge und Werten, die durch eine vorgeschriebene Funktion gegeben werden, die eine Form einer Tonhöhenkurve, die die herausgeschnittene Abfolge annehmen kann, darstellt;

eine zweite merkmalherausziehende Einheit (8) zum Erzeugen einer Merkmalsvektorzeitreihe, die ein Merkmal der Tonfolge des Abrufziels darstellt, durch Herausziehen einer Abfolge von Tonhöhenfrequenzen aus dem Abrufziel und durch Berechnung eines inneren Produktes aus einer aus der Abfolge von Tonhöhenfrequenzen für jedes vorgeschriebene Zeitfenster herausgeschnittenen Abfolge und Werten, die durch die vorgeschriebene Funktion gegeben werden; und

eine Abrufeinheit (10) zum Abgleichen der Merkmalsvektorzeitreihe der Abrufeingabe mit der Merkmalsvektorzeitreihe des Abrufziels, um eine zusammenpassende Position und Ähnlichkeit der Merkmalsvektorzeitreihe der Abrufeingabe in der Merkmalsvektorzeitreihe des Abrufziels zu berechnen, und zum Abrufen eines Musikstücks aus dem Abrufziel gemäß der Ähnlichkeit.

**2.** Musikabrufvorrichtung nach Anspruch 1, wobei die erste und zweite merkmalsherausziehenden Einheiten (3, 8) jede die Merkmalsvektorzeitreihe erzeugen durch Zuweisung von Gewichten zu der Abfolge, die aus der Abfolge von Tonhöhenfrequenzen für die einzelnen vorgeschriebenen Zeitfenster herausgeschnitten wird, in einer Weise, dass die Abfolge längs der Tonhöhenkurve, die die Abfolge annehmen kann, folgt, und dann durch Berechnung des inneren Produktes der Abfolge und der Werte, die durch die vorgeschriebene Funktion gegeben werden.

**3.** Musikabrufvorrichtung nach Anspruch 1, wobei
zumindest eine der ersten und zweiten merkmalsextrahierenden Einheiten (3, 8) die Merkmalsvektorzeitreihe erzeugt durch Herausziehen einer Vielzahl von Tonhöhenfrequenzkandidaten für jedes vorgeschriebene Zeitfenster, durch Zuweisung von Gewichten zu den Tonhöhenfre-quenzkandidaten innerhalb des Zeitfensters in einer Weise, dass die Tonhöhenfrequenzkandidaten längs einer Tonhöhenkurve, die die Kandidaten annehmen können, folgt und dann durch Berechnung des inneren Produktes der Tonhöhenfrequenzkandidaten und der Werte, die durch die vorgeschriebene Funktion gegeben werden.

**4.** Musikabrufvorrichtung nach Anspruch 2, wobei die für die Gewichtung verwendeten Gewichte Wahrscheinlichkeiten der herausgezogenen Tonhöhenfrequenzen sind.

**5.** Musikabrufvorrichtung nach Anspruch 3, wobei die für die Gewichtung verwendeten Gewichte Wahrscheinlichkeiten der herausgezogenen Tonhöhenfrequenzen sind.

**6.** Musikabrufvorrichtung nach Anspruch 2, wobei die für die Gewichtung verwendeten Gewichte Größen der Variationen der herausgezogenen Tonhöhenfrequenzen sind.

**7.** Musikabrufvorrichtung nach Anspruch 3, wobei die für die Gewichtung verwendeten Gewichte Größen von Variationen der herausgezogenen Tonhöhenfrequenzen sind.

8. Musikabrufvorrichtung nach Anspruch 1, weiterhin enthaltend:

   eine Betonungsverarbeitungseinheit (7) zum Betonen einer Themenkomponente der Abrufeingabe und/oder des Abrufziels, um ein Herausziehungsziel der Tonhöhenfrequenzen zu erzeugen.

9. Musikabrufvorrichtung nach Anspruch 1, wobei die vorgeschriebene Funktion eine Cosinus-Funktion ist.

**Revendications**

1. Appareil de recherche de musique destiné à faire correspondre une mélodie d'une entrée de recherche, à une mélodie d'une cible de recherche, et à rechercher un morceau de musique souhaité à partir de la cible de recherche selon le résultat de la correspondance, l'appareil de recherche de musique comprenant :

   une première unité d'extraction de caractéristique (3) destinée à générer une série chronologique de vecteur de caractéristique qui représente une caractéristique de la mélodie de l'entrée de recherche en extrayant une séquence de fréquences de hauteur à partir de l'entrée de recherche, et en calculant un produit intérieur d'une séquence coupée parmi la séquence de fréquences de hauteur pour chaque fenêtre temporelle prescrite, par des valeurs données par une fonction prescrite qui représente une forme d'une courbe de hauteur que peut prendre la séquence coupée ;
   une seconde unité d'extraction de caractéristique (8) destinée à générer une série chronologique de vecteur de caractéristique qui représente une caractéristique de la mélodie de la cible de recherche en extrayant une séquence de fréquences de hauteur à partir de la cible de recherche, et en calculant un produit intérieur d'une séquence coupée parmi la séquence de fréquences de hauteur pour chaque fenêtre temporelle prescrite, par des valeurs données par la fonction prescrite ; et
   une unité de recherche (10) destinée à faire correspondre la série chronologique de vecteur de caractéristique de l'entrée de recherche, à la série chronologique de vecteur de caractéristique de la cible de recherche, de façon à calculer une position de correspondance et une similitude de la série chronologique de vecteur de caractéristique de l'entrée de recherche dans la série chronologique de vecteur de caractéristique de la cible de recherche, et à rechercher un morceau de musique à partir de la cible de recherche selon la similitude.

2. Appareil de recherche de musique selon la revendication 1, dans lequel :

   les première et seconde unités d'extraction de caractéristique (3, 8) génèrent chacune la série chronologique de vecteur de caractéristique en attribuant des poids à la séquence, qui est coupée parmi la séquence de fréquences de hauteur pour les fenêtres temporelles prescrites individuelles, de telle sorte que la séquence suive la courbe de hauteur que peut prendre la séquence, et en calculant ensuite le produit intérieur de la séquence par les valeurs données par la fonction prescrite.

3. Appareil de recherche de musique selon la revendication 1, dans lequel :

   l'une au moins des première et seconde unités d'extraction de caractéristique (3, 8) génère la série chronologique de vecteur de caractéristique en extrayant une pluralité de fréquences de hauteur candidates pour chaque fenêtre temporelle prescrite, en attribuant des poids aux fréquences de hauteur candidates à l'intérieur de la fenêtre temporelle, de telle sorte que les fréquences de hauteur candidates suivent une courbe de hauteur que peuvent prendre les candidates, et en calculant ensuite le produit intérieur des fréquences de hauteur candidates, par les valeurs donnés par la fonction prescrite.

4. Appareil de recherche de musique selon la revendication 2, dans lequel les poids utilisés pour la pondération, sont des probabilités des fréquences de hauteur extraites.

5. Appareil de recherche de musique selon la revendication 3, dans lequel les poids utilisés pour la pondération, sont des probabilités des fréquences de hauteur extraites.

6. Appareil de recherche de musique selon la revendication 2, dans lequel les poids utilisés pour la pondération, sont des quantités de variation des fréquences de hauteur extraites.

**7.** Appareil de recherche de musique selon la revendication 3, dans lequel les poids utilisés pour la pondération, sont des quantités de variation des fréquences de hauteur extraites.

**8.** Appareil de recherche de musique selon la revendication 1, comprenant en outre :

une unité de traitement de mise en évidence (7) destinée à mettre en évidence une composante de thème de l'une au moins de l'entrée de recherche et de la cible de recherche, de façon à obtenir une cible d'extraction des fréquences de hauteur.

**9.** Appareil de recherche de musique selon la revendication, 1, dans lequel la fonction prescrite est une fonction cosinus.

FIG.1

# FIG.2

(a) Input Singing Signal Spectrogram

(b) Input Singing Pitch y ( j )

(c) Weight w ( j )

(d) Coefficient Matrix
C ( m, n )

(e) Feature Vector Time Series

## FIG.3

Vocal Emphasis Unit ~7

Tune Input Signal 701 → Signal Separating Unit 702

Left Channel Signal 703L → Window Unit 704L → FFT Unit 705L → Arithmetic Mean Unit 711

Peak Detecting Unit 706L

Matching Estimating Unit 707

Peak Detecting Unit 706R

Right Channel Signal 703R → Window Unit 704R → FFT Unit 705R

Volume Ratio Calculating Unit 708 → Gain Calculating Unit 709 → Low-Frequency Range Correcting Unit 710 → Gain Multiplying Unit 712

Complex Frequency Spectrum 713 → Inverse FFT Unit ~714 → Overlap Addition Unit 715 → Monaural Acoustic Signal 716

EP 2 402 937 B1

# FIG.4

# FIG.5

(a) Spectrogram of Original Signal
   (Color Depth Corresponds to Intensity of Spectrum Components)

s3.org

(b) Pitch Extraction Result from Original Signal

pit3.org

(c) Spectrogram of Signal after Voice Emphasis
   (Color Depth Corresponds to Intensity of Spectrum Components)

s3.enh

(d) Pitch Extraction Result from Signal after Voice Emphasis

pit3.enh

# FIG.6

(a) Tune Spectrogram

(b) Tune Pitch
x ( i ; k )

(c) Weight
w ( i ; k )

(d) Coefficient Matrix
C ( m, n )

m = 1
m = 2
m = 3
m = 4

Shift in Unit of Frame Length

(e)Feature Vector Time Series

# FIG.7

(a) Spotting in Continuous DP

Maximum Peak

Similarity
S ( i, J ; k )

J

Frame Number j of
Feature Vector Sequence
Y( j, * ) of Input Singing

Matching
Section

1

1    B(E(k),J ;k)    E(k)    I(k)

Frame Number of Feature Vector Sequence
X( i, * ; k ) of Singing of Tune k

(b) Local Paths of Continuous DP

1/2

j

1/2

1

1

j-1    Path①  Path②

1

j-2    Path③

i-2    i-1    i

Sum Total of Path
Weights Per Frame
in j Direction
= Constant

# FIG.8

(a) Tune Spectrogram

(b) Tune Pitch
x ( i ; k )

(c) Weight
w( i ; k )

(d) Coefficient Matrix
C ( m, n )

m = 1
m = 2
m = 3
m = 4

Shift in Unit of Frame Length

(e) Feature Vector Time Series

# FIG.9

(a) Pitch Frequency

Pitch Candidate 1

Pitch Frequency

Pitch Candidate 2

Pitch Candidate 3

Frame Number i

(b) Weight of Pitch Candidate

Pitch Candidate 1

Pitch Candidate 3

Weight

Pitch Candidate 2

Frame Number i

(c) Number of Pitch Candidates

2

Candidates 1

0

i1    i2   i3    i4

Frame Number i

Window

(d) Production of Pitch Candidates

Pitch Frequency

A2

B1

C2

A1

C1

A0    B0    C0

0

-N/2        0        N/2-1

Relative Frame Number n in Window

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3467415 B
- JP 3844627 B

- US 5874686 A

### Non-patent literature cited in the description

- **TOMONARI SONODA.** A WWW-Based Melody Retrieval System. *The Transactions of the Institute of Electronics, Information and Communication Engineers,* April 1999, 721-731
- **TETSUYA KAGEYAMA ; YOSUKE TAKASHIMA.** A Melody Retrieval Method with Hummed Melody. *The Transactions of the Institute of Electronics, Information and Communication Engineers,* August 1994, 1543-1551
- **HIROKI HASHIGUCHI.** Music Signal Spotting Retrieval by a Hamming Query Using Model Driven Path Continuous Dynamic Programming. *The Transactions of the Institute of Electronics, Information and Communication Engineers,* December 2001, 2479-2488

- **HIROMASA FUJIHARA.** An F0 estimation method for detecting vocal part in polyphonic music by using vocal GMM and Viterbi search. *Information Processing Society of Japan, Special Interest Group on Music and Computer,* 02 August 2007, vol. 2007 (81), 119-126
- **AKIHIRO MIWA ; SATORU MORITA.** Automatic Music Transcription Using Stereo Musical Sound Signal for a Trio. *The Transactions of the Institute of Electronics, Information and Communication Engineers,* July 2001, vol. 7, 1251-1260